Europäisches Patentamt

European Patent Office

Office européen des brevets

(19)

(11) Veröffentlichungsnummer : **0 087 571 B1**

## (12) EUROPÄISCHE PATENTSCHRIFT

(45) Veröffentlichungstag der Patentschrift :
07.05.86

(21) Anmeldenummer : 83100515.2

(22) Anmeldetag : 21.01.83

(51) Int. Cl.⁴ : **G 01 N 29/00, B 41 F 33/00**

(54) Vorrichtung zur berührungslosen messtechnischen Echtzeiterfassung der den Trenn- bzw. Spaltprozess von Flüssigkeitsvolumen bzw. Flüssigkeitsschichten in Walzenspalten von Druckmaschinen charakterisierenden Eigenschaften bzw. Grossen.

(30) Priorität : 19.02.82 DE 3205941

(43) Veröffentlichungstag der Anmeldung :
07.09.83 Patentblatt 83/36

(45) Bekanntmachung des Hinweises auf die Patenterteilung : 07.05.86 Patentblatt 86/19

(84) Benannte Vertragsstaaten :
AT CH DE FR GB IT LI NL SE

(56) Entgegenhaltungen :
EP-A- 0 000 689
DE-B- 2 214 721
DE-B- 2 730 622
Patent Abstracts of Japan Band 6, Nr. 79, 18. Mai 1982
TECHNISCHES MESSEN, Band 47, Nr. 12, 1980 J. KASSER et al. "Prüfung industrieller Bauteile mit Hilfe der Schallemissionsanalyse", Seiten 435-440

(73) Patentinhaber : **Forschungsgesellschaft Druckmaschinen e.V.**
**Lyonerstrasse 18**
**D-6000 Frankfurt (DE)**

(72) Erfinder : **Wiesner, Reiner**
**Lessingstrasse 12**
**D-6108 Weiterstadt 2 (DE)**

(74) Vertreter : **Marek, Joachim**
**c/o M.A.N.-ROLAND Borsigstrasse 19**
**D-6052 Mühlheim/Main (DE)**

## Beschreibung

Die Erfindung bezieht sich auf ein Verfahren und eine Vorrichtung zur berührungslosen meßtechnischen Echtzeiterfassung der den Trenn- bzw. Spaltprozeß von Flüssigkeitsvolumen bzw. Flüssigkeitsschichten in Walzenspalten von Druckmaschinen charakterisierenden Eigenschaften bzw. Größen.

Die Erfindung gestattet hierbei die gewichtete Messung der Feuchtmittelmenge pro Flächeneinheit, wobei dem an der Farboberfläche verbleibenden Feuchtmittel ein größeres Gewicht zufällt als dem in die Farbe einemulgierten Feuchtmittel.

Zweck :

Das Trennen bzw. Spalten von Flüssigkeitsvolumen bzw. Flüssigkeitsschichten dient in der Technik im allgemeinen dem Zweck der Erzeugung kleinerer Flüssigkeitsvolumen bzw. dünnerer Flüssigkeitsschichten von definierter Größe bzw. Dicke. Das erfindungsgemäße Verfahren kann hierbei zur Echtzeitmessung in den entsprechenden Maschinen für Kontroll- und Regeleinheiten eingesetzt werden. So ist speziell beim Bedrucken eines Bedruckstoffes, wie z. B. Papier mit Druckfarbe, die Qualität des Druckbildes in ganz entscheidendem Maße von der Dicke der aufgetragenen Farbschicht abhängig. Beim Offsetdruck sind zudem die Qualität des Druckbildes und das ungestörte Funktionieren des Druckverfahrens in ganz entscheidender Weise von der Feuchtmittelmenge bzw. dem Verhältnis von Farb- und Feuchtmittelmenge am Ausgang der Walzenspalte zwischen den Farbauftragwalzen und dem Druckplattenzylinder abhängig. In diese Abhängigkeiten geht das an der Farboberfläche verbleibende Feuchtmittel mit einem größeren Gewicht ein als in der Farbe emulgierte Feuchtmittel und beeinflußt auch die vom Spaltausgang ausgesandten und dem akustischen Sensor detektierten Schallwellen stärker als das in Farbe emulgierte Feuchtmittel, wodurch das erfindungsgemäße Verfahren für eine Funktions- und Qualitätskontrolle bei diesem Druckverfahren besonders geeignet ist.

Stand der Technik :

Aus der EP-A 0 000 689 ist ein spektrales Meßverfahren zur Überwachung des Feucht- und Farbgleichgewichts bei Offsetdruckwerken bekannt. Aus der JP-A-57-16349 ist außerdem eine Ultraschall-Meßmethode bekannt, bei der jedoch Schallwellen detektiert werden, die beim Pressen und nicht bei der Trennung einer Substanz ermittelt werden.

Für die nicht in den Prozeß eingreifende meßtechnische Echtzeiterfassung des Trennens bzw. Spaltens von Flüssigkeitsvolumen bzw. Flüssigkeitsschichten in Teilvolumina bzw. Teilschichten bestimmter Größe bzw. Dicke werden gegenwärtig in erster Linie elektrische, magnetische und spektrale Meßverfahren eingesetzt. Zur ersten Gruppe gehören vor allem Kapazitäts- und Leitfähigkeitsmeßgeräte ; zur zweiten Gruppe gehören vor allem die induktiven Wegaufnehmer und zur dritten Gruppe gehören schließlich die mit Mikrowellen, Infrarotstrahlung, sichtbarem Licht, ultravioletter Strahlung, Röntgenstrahlung und Kernstrahlung arbeitenden Meßgeräte. Für die Erfassung relativ großer Volumina bzw. relativ dicker Schichten, wäre hier noch das Echolot-Verfahren zu erwähnen.

Bei allen bisher beim Offsetdruckprozeß zur Kontrolle der Feuchtmittelführung eingesetzten Meßgeräten, welche nicht in den Prozeß eingreifen, wird mittels eines Senders Energie in Form elektronomagnetischer Wellen durch die feuchtmittelführende Farbe gesandt und bei geeigneten Wellenlängen der vom Feuchtmittel absorbierte Anteil der ausgesandten Energie mittels eines Detektors nachgewiesen. Ebenso wird, abgesehen von der nur im Labor bisher eingesetzten radioaktiven Tracer-Methode, auch die Farbschichtdicke in Druckmaschinen berührungslos gemessen.

Kritik des Standes der Technik :

Die bisher eingesetzten nicht in den Prozeß eingreifenden Echtzeitmeßverfahren zur Erfassung des Trennens bzw. Spaltens von Flüssigkeitsvolumen bzw. Flüssigkeitsschichten in Teilvolumina bzw. Teilschichten nach ihrer Größe bzw. Schichtdicke benötigten zusätzlich zu einem Signalempfänger einen vom Trenn- bzw. Spaltprozeß unabhängigen Signalsender, wohingegen der Trenn- bzw. Spaltprozeß bei dem erfindungsgemäßen Verfahren selbst die Sendefunktion übernimmt und die beim mechanischen Trenn- bzw. Spaltprozeß ausgesandten mechanischen Wellen detektiert werden.

Die speziell beim Offsetdruckprozeß zur Kontrolle der Feuchtmittelführung eingesetzten Meßverfahren, welche nicht in den Prozeß eingreifen, haben zudem insbesondere den Nachteil, daß sie die Gesamtfeuchtmittelmenge messen und keine stärkere Gewichtung der auf der Farboberfläche verbleibenden Feuchtmittelmenge gegenüber der einemulgierten Feuchtmittelmenge entsprechend ihrem größeren Einfluß auf das Funktionieren dieses Druckverfahrens zulassen. Hinzu kommt, daß die gegenwärtig für die Feuchtmittelkontrolle erhältlichen Meßgeräte trotz großer Anstrengungen nicht soweit miniaturisiert werden konnten, daß ihr Einbau in Offsetdruckmaschinen als problemlos angesehen werden könnte und vor allem keine freie Wahl des Meßortes zwischen den Walzen möglich ist. Als Meßort wird bei diesen Feuchtmittelkontrollgeräten im allgemeinen ein Flächenelement des Druckplattenzylinders zwischen dem Feuchtwerk und dem Farbwerk gewählt, was nur dann möglich ist, wenn das Feuchtwerk den Druckplattenzylinder direkt berührt und nicht wie bei einigen Offsetdruckmaschinen nur berührenden Kontakt mit dem Farbwerk hat. Zudem liefert eine scheinbar ausreichende Feuchtmittelmenge auf einen nicht für die Farbannahme vorgesehenen Flächenelement keine Garantie dafür, daß nicht infolge starker Verdunstung des Feuchtmittels und eines zu hohen Druckes in den Walzenspalten zwischen den Farbauftragwalzen und dem Plattenzylinder auch diese Flächenelemente Farbe annehmen. Auf einem für die Farbannahme vorgesehenen Flächenelement liefert sie im umgekehrten Fall keine Garantie dafür, daß nicht infolge eines zu geringen Druckes in den Walzenspalten, zwischen den Farbauftragwalzen und dem Plattenzylinder und der dadurch bedingten unvollständigen Verdrängung des Feuchtmittels durch die Farbe, eine unvollständige Farbannahme auftritt.

Da derartige Störungen der für das Funktionieren des Offsetdruckprozesses fundamentalen Spaltung des Feuchtmittelfilmes auch den nicht für die Farbannahme vorgesehenen Flächenelementen bzw. die Spaltung der Farbe-Feuchtmittel-Emulsion auf den für die Farbannahme vorgesehenen Flächenelementen die beim Spaltprozeß ausgesandten Schallwellen stark beeinflussen, detektiert das erfindungsgemäße Verfahren diese Störungen direkt am Ort ihrer Entstehung und damit praktisch ohne zeitliche Verzögerung.

Die bekannten, in Druckmaschinen eingesetzten Farbschichtdickenmeßverfahren, welche berührungslos arbeiten, sind alle in relativ starker Weise von verschiedenen physikalischen Eigenschaften der Walzenwerkstoffe abhängig, auf welchen sich die Druckfarbe befindet. Ihre Anwendung ist daher an die Verwendung bestimmter, für das jeweilige Meßverfahren geeigneter Walzenwerkstoffe, gebunden. So sind z. B. kapazitive Meßverfahren an metallische Walzenoberflächen oder an Walzenwerkstoffe gebunden, deren Dielektrizitätskonstante sich deutlich von der Dielektrizitätskonstanten der Farbe unterscheidet. Die mit sichtbarem Licht arbeitenden Farbschichtdickenmeßgeräte reagieren unerwünscht empfindlich auf Änderungen des Remissionsvermögens der Walzenoberflächen, welche im praktischen Betrieb von Druckmaschinen unvermeidlich sind.

Das erfindungsgemäße Verfahren erlaubt demgegenüber eine vom Walzenwerkstoff praktisch vollkommen unbeeinflußte Messung der Farbschichtdicken unter der Annahme, daß die im Walzenspalt vorhandene Farbschicht in einem bekannten Verhältnis am Spaltausgang aufgeteilt wird und kein Feuchtmittel vorhanden ist. Speziell beim Offsetdruckverfahren, welches durch die Anwesenheit eines Feuchtmittels in emulgierter und an der Farboberfläche haftenden Form gekennzeichnet ist, ist das erfindungsgemäße Meßverfahren nur bedingt als Farbschichtdickenmeßverfahren einsetzbar.

Da eine Zunahme bzw. Abnahme der Farbschichtdicke jedoch eine Zunahme bzw. Abnahme des in die Druckfarbe emulgierten Feuchtmittelanteils gegenüber dem an der Farboberfläche haftenden Feuchtmittelanteils nach sich zieht, bewirkt der unterschiedliche Einfluß dieser beiden Feuchtmittelanteile auf die beim Spaltprozess ausgesandten Schallwellen, daß der gewichtete Feuchtmittelmengen-Meßwert auch Aussagen über die Farbschichtdicke zuläßt.

Aufgabe :

Der Erfindung liegt die Aufgabe zugrunde, ein die Trennung bzw. Spaltung von Flüssigkeitsvolumen in Teilvolumina charakterisierendes und quantitativ in Echtzeit berührungslos erfassendes Meßverfahren zu entwicklen, welches den Trenn- bzw. Spaltprozeß nicht beeinflußt und zur Kontrolle bzw. Regelung derartiger Prozesse verwendet werden kann.

Lösung :

Die Aufgabe wird dadurch gelöst, daß die erfindungsgemäße Vorrichtung folgende Teile aufweist :
— einen in der Nähe des Ausgangs eines Walzenspalts angeordneten akustischen Sensor zum Empfang der beim Spaltprozeß erzeugten und ausgesandten Schallsignale ;
— eine dem Sensor nachgeschaltete Auswerteelektronik zur Weiterverarbeitung der elektrischen Signale des Sensors, und
— eine mit der Auswerteelektronik verbundene Anzeige.

Vorzugsweise wird erfindungsgemäß der Sensor in einem Spaltausgang zwischen einer Auftragwalze und einer Druckplatte angeordnet.

Erfindungsgemäß nimmt der Sensor nur Schallwellen im Ultraschallbereich auf. Die Auswerteelektronik des Sensors enthält vorzugsweise einen Fourieranalysator.

Speziell ist bei der Farb- bzw. Leimspaltung in Druck- bzw. Leimauftragemaschinen mittels bereits bekannter Schichtdickenmeßverfahren eine Kalibrierung des erfindungsgemäßen Verfahrens so möglich, daß dieses als Farb- bzw. Leimschichtdickenmeßverfahren zur Kontrolle bzw. Regelung dieser Schichtdicken anwendbar ist. Da beim Offsetdruckverfahren von dem im Walzenspalt vorliegenden Druckfarbe-Feuchtmittelgemisch das Feuchtmittel eine etwa um den Faktor $10^{-3}$ kleinere Zähigkeit aufweist als die Druckfarbe, wird dieses Gemisch am Walzenspaltausgang vorwiegend quer durch Feuchtmittel enthaltende Volumenelemente, d. h. an den schwächsten Stellen gespalten, wodurch das Feuchtmittel an die Farboberfläche gelangt, wo sein Einfluß auf den nächsten Spaltvorgang am stärksten ist. Die hierfür erforderliche Arbeit und die dabei in Form von Schallwellen ausgesandte Energie ändert sich infolge des großen Unterschiedes zwischen der Konsistenz der Farbe und der Konsistenz des Feuchtmittels sehr stark mit einer Änderung des Verhältnisses beider Anteile. Die Schwingungen der Farblamellen und Farbfäden, welche die Schallabstrahlung hervorrufen, werden ferner durch die emulgierten Feuchtmitteltröpfchen und das an der Oberfläche der Farbe verbleibende Feuchtmittel in Abhängigkeit von dem Farbe-Feuchtmittelverhältnis stark gedämpft.

Durch die meßtechnische Erfassung des bei der Spaltung eines Druckfarbe-Feuchtmittelgemisches vom Walzenspalt ausgesandten Schalls mittels eines akustischen Sensors wird somit die Aufgabe gelöst, eine Größe zu finden und zu messen, in welche die an der Farboberfläche verbleibende Feuchtmittelmenge mit größerem Gewicht eingeht als die in die Druckfarbe einemulgierte Feuchtmittelmenge und in welcher zu dem noch eine Information über die Farbmenge enthalten ist. Insbesondere wurde hiermit die Aufgabe gelöst, Störungen der Funktion des Offsetdruckverfahrens und damit Änderungen der Druckqualität, welche durch ein gestörtes Spaltverhalten infolge einer zu geringen oder zu hohen Feuchtmittelführung bzw. eines zu hohen oder zu geringen Druckes zwischen den Farbauftragwalzen und dem Druckplattenzylinder hervorgerufen werden, wie das sogenannte « Tonen » oder die sogenannten « Wassermarken » direkt am Ort ihres Entstehens und damit ohne zeitliche Verzögerung zu erfassen. Die Messung der Spaltgeräusche an der ersten Farbauftragwalze hat also den besonderen Vorteil, daß unmittelbar auf der Platte die Flüssigkeitsverteilung erfaßt werden kann.

Die Erfindung ist daher zur berührungslosen Echtzeiterfassung des für den Offsetdruckprozeß relevanten Verhältnisses von Farbmenge zu Feuchtmittelmenge unter besonderer Gewichtung des an der Farboberfläche nach der Spaltung verbleibende Feuchtmittelanteiles anwendbar und für den Einsatz bei der Kontrolle und Regelung dieses Verhältnisses und damit der Druckqualität geeignet. Der akustische Sensor ist ferner soweit miniaturisierbar, daß sein Einbau auch bei sehr engen Platzverhältnissen möglich ist.

Das der Erfindung zugrundeliegende Prinzip ist entsprechend dem Verfahrensanspruch 5 allgemein zur berührungslosen Messung von Flüssigkeitsmengen anwendbar, indem Flüssigkeit zwischen zwei einander gegenüberliegende Flächen aufgebracht wird, die Flächen auseinander bewegt werden, die bei diesem Spaltprozeß entstandenen und ausgesandten Schallwellen durch einen akustischen Sensor aufgenommen werden und die aufgenommene Energie meßtechnisch ausgewertet wird.

Im besonderen kann das Verfahren zur Messung von Dämpfen (z. B. Wasserdampf) in Gasen (z. B. Luft) verwendet werden, wobei durch den akustischen Sensor der ausgesandte Schall gemessen wird, welcher beim aufeinander Abrollen zweier Walzen bzw. Walzensegmente im Walzenspalt dann entsteht, wenn diese mit Werkstoffen überzogen sind, welche diese Dämpfe aufnehmen (z. B. eine hygroskopische Schicht).

Erzielbare Vorteile :

Die mit der Erfindung erzielbaren Vorteile liegen insbesondere darin, daß der mikroskopisch betrachtet, mechanische Vorgang des Trennens bzw. Spaltens eines Flüssigkeitsvolumens in Teilvolumina berührungslos durch die dabei entstehenden und ausgesandten mechanischen Wellen meßtechnisch mittels einem akustischen Sensor erfaßt wird. Die den Trenn- bzw. Spaltprozeß charakterisierenden Eigenschaften der Flüssigkeit bzw. des Flüssigkeitsgemisches charakterisieren auch die dabei entstehenden und ausgesandten Schallwellen. Die meßtechnische Erfassung dieser Schallwellen liefert daher ein direkt den Trenn- bzw. Spaltprozeß kennzeichnendes Maß, welches zur Kontrolle und Regelung dieser Prozesse angewendet werden kann. Der Trenn- bzw. Spaltprozeß übernimmt bei dem erfindungsgemäßen Verfahren selbst die Sendefunktion, es besitzt damit einen wesentlichen Vorteil gegenüber den bisher zur Erfassung dieser Prozesse eingesetzten Meßverfahren. Das erfindungsgemäße Verfahren kann so kalibriert werden, daß es die Teilvoluminagröße bzw. -größenverteilung direkt zur Anzeige bringt.

Insbesondere ist die Erfindung bei der Spaltung eines Flüssigkeitsvolumens am Ausgang eines Walzenspaltes zwischen zwei aufeinander abrollenden Walzen bzw. Walzensegmenten, wie sie in Druckmaschinen und Leimauftragemaschinen auftritt, als Schichtdickenmeßverfahren anwendbar, wobei es gegenüber den bekannten Schichtdickenmeßverfahren den Vorteil besitzt, daß es die Schichtdicken praktisch unbeeinflußt vom Walzenwerkstoff berührungslos erfaßt und keinen prozeßunabhängigen Sender benötigt. Es ist damit zur Kontrolle und Regelung von Flüssigkeitsschichtdicken bei solchen Spaltprozessen anwendbar.

Gegenüber den speziell beim Offsetdruckverfahren zur berührungslosen Kontrolle der Feuchtmittel-führung bisher eingesetzten Meßverfahren besitzt die Erfindung den Vorteil, daß sie anstelle der Gesamtfeuchtmittelmenge eine für die Spaltung des Druckfarbe-Feuchtmittelgemisches charakteristische Größe erfaßt, in welche das Druckfarbe-Feuchtmittel-Mengenverhältnis unter besonders starker Gewichtung des nach der Spaltung an der Farboberfläche verbleibenden Feuchtmittelanteils eingeht. Da der akustische Sensor bei dem erfindungsgemäßen Verfahren soweit miniaturisierbar ist, daß der Meßort in Offsetdruckmaschinen frei wählbar ist, besitzt es zudem den Vorteil, daß die Spaltung des Druckfarbe-Feuchtmittelgemisches direkt an den Spaltausgängen zwischen den Farbauftragwalzen und dem Druckplattenzylinder, also an den Entstehungsorten der bekanntesten Störungen des Offsetdruckverfahrens in Echtzeit berührungslos erfaßt werden kann. Da das erfindungsgemäße Verfahren zudem auch dann angewendet werden kann, wenn das Feuchtwerk statt mit der Druckplatte mit dem Farbwerk in Berührung steht, ist dieses Verfahren bei allen bekannten Offsetdruckmaschinen zur Erfassung, Kontrolle und Regelung des gewichteten Druckfarbe-Feuchtmittel-Mengenverhältnisses anwendbar.

Nachfolgend werden Ausführungsbeispiele anhand der Zeichnungen erläutert.

Figur 1 einen Ausschnitt aus einer Offsetdruckmaschine mit Farb- und Feuchtwerk,

Figur 2 eine Meßanordnung,

Figur 3 ein Zeitdiagramm des Meßwertes und

Figur 4 eine andere Art von Meßanordnung.

Beschreibung :

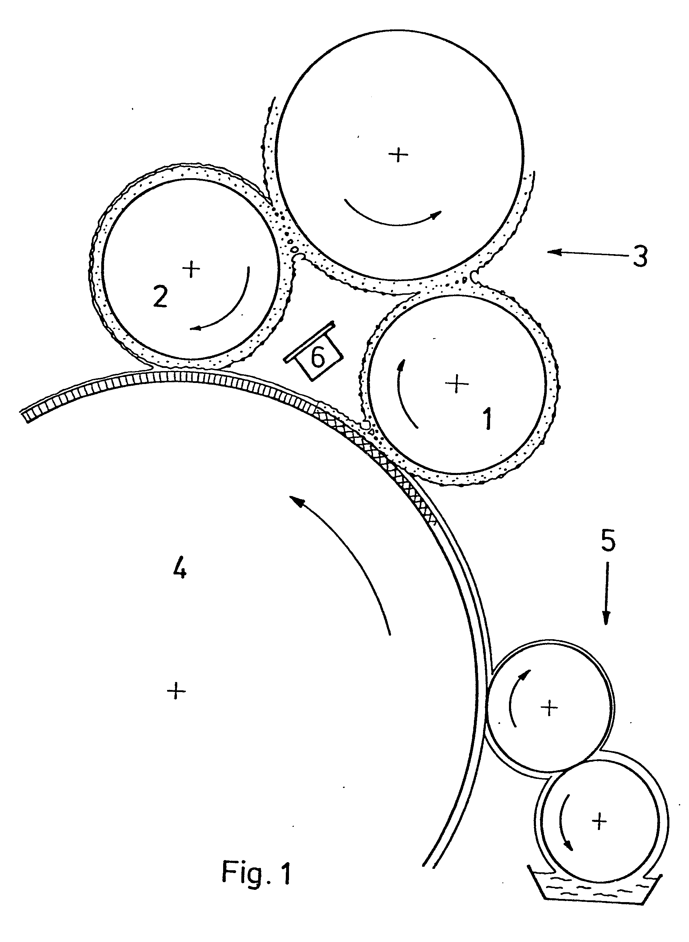

In Fig. 1 ist ein Ausschnitt aus einer Druckmaschine dargestellt. Die Auftragwalzen 1, 2 eines nicht weiter dargestellten Walzenfarbwerks 3 rollen auf einem Plattenzylinder 4 ab. In Plattenzylinderdrehrichtung gesehen vor dem Farbwerk 3 ist ein Feuchtwerk 5 dem Plattenzylinder 4 zugeordnet. Der erfindungswesentliche akustische Sensor 6 ist im Walzenspaltausgang zwischen Plattenzylinder 4 und erster Farbauftragwalze 1 angeordnet.

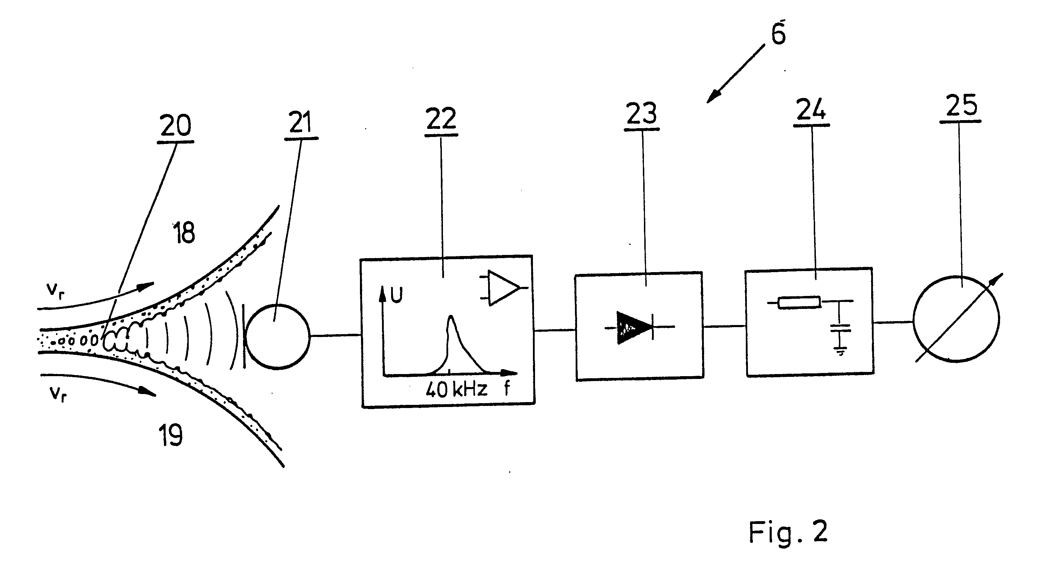

Das erste hier beschriebene Ausführungsbeispiel der Erfindung ist in Fig. 2 dargestellt.

Hierin zeigt Position 20 einen Spaltausgang, der von zwei aufeinander mit der Umfangsgeschwindigkeit $v_r$ abrollenden Walzen 18, 19 gebildet wird, deren Mantelflächen mit einem Flüssigkeitsgemisch bedeckt sind, welches an diesem Spaltausgang gespalten wird. Gegenüber von dem Spaltausgang befindet sich der akustische Sensor 6, welcher der meßtechnischen Erfassung der beim Spaltprozeß ausgesandten Schallsignale dient. Von diesem zeigt Position 21 ein Ultraschall-Kristallmikrofon, welches die empfangenen Schallsignale in elektrische Signale umwandelt, die in dem in Position 22 dargestellten Verstärker anschließend verstärkt werden. Position 22 zeigt auch den Frequenzgang der aus dem Kristallmikrofon und dem Verstärker gebildeten Einheit, welcher bei einer Schallfrequenz von 40 kHz eine Resonanzstelle aufweist und den Vorteil mit sich brachte, daß der Einfluß störender Maschinengeräusche deren Frequenzen deutlich unter 40 kHz liegen weitgehend eliminiert wurden. Das Ausgangssignal des Verstärkers wird dem in Position 23 dargestellten Gleichrichter zugeführt, welcher die ankommende bipolaren Signalfolge in eine polare Signalfolge umwandelt. Dem Gleichrichter ist dann noch ein in Position 24 dargestellter Frequenzfilter (Tiefpass) nachgeschaltet, welcher die hochfrequente polare Signalfolge durch Mittelwertbildung in ein niederfrequentes Signal unwandelt. Dieses Signal wird dann mit einem in Position 25 dargestellten Spannungsanzeigeinstrument zur Anzeige gebracht.

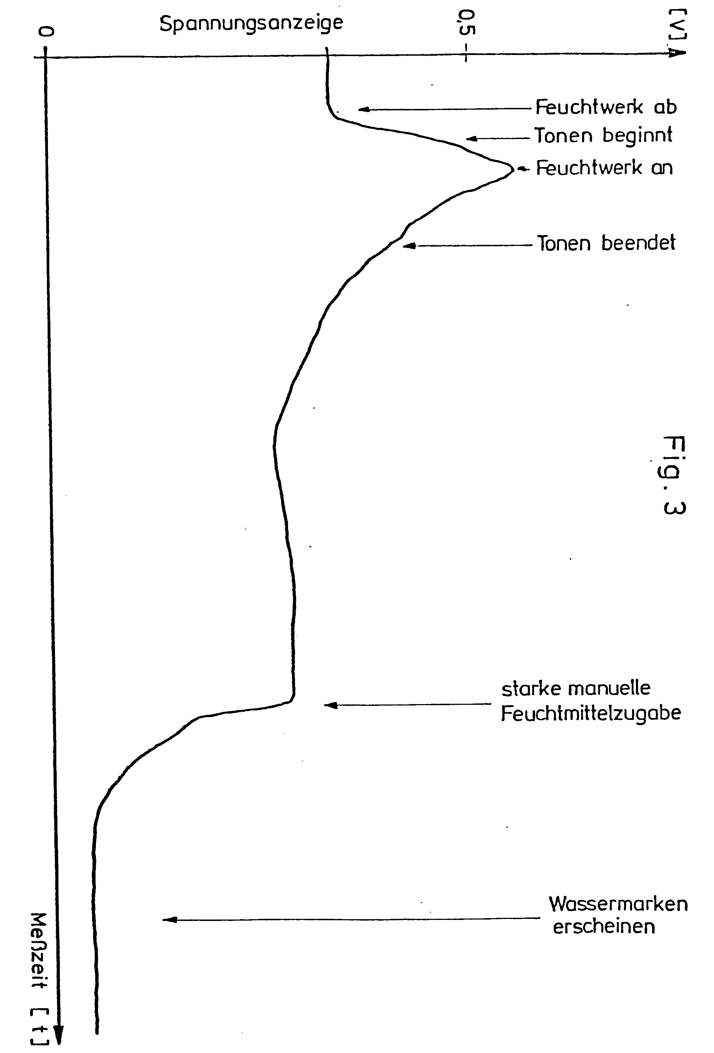

Fig. 3 gibt die mittels eines xt-Schreibers registrierte Spannungsanzeige über der Meßzeit wieder, welche mit dem in Fig. 2 dargestellten akustischen Sensor bei einer Messung in einer Bogenoffsetdruckmaschine unter Variation der Druckbedingungen erhalten wurde. Der akustische Sensor war hierbei gegenüber von dem Spaltausgang zwischen der ersten dem Feuchtwerk in Umlaufrichtung folgenden Farbauftragswalze und der darüber liegenden Verreiberwalze angeordnet.

Fig. 3 zeigt nun von links nach rechts, wie von normalen Druckbedingungen ausgehend die Spannungsanzeige nach dem Abstellen der Feuchtmittelzufuhr stark zunimmt und nach relativ kurver Zeit, die dem Bedrucken von 7 Papierbogen entsprach, das sogenannte Tonen einsetzte, also jene Funktionsstörung des Offsetdruckes, bei welcher die nicht für die Farbannahme vorgesehenen Flächenelemente der Druckplatte vor dieser durch den Feuchmittelfilm nicht mehr geschützt wurden und daher Farbe annahmen. Das kurz nach der Beobachtung dieser Störung erfolgte Anstellen der Feuchtmittelzufuhr führt wieder zur Abnahme der Spannungsanzeige und Einstellung normaler Druckbedingungen. Anschließend wurde, wiederum von normalen Druckbedingungen ausgehend mittels einer Spritzflasche sehr viel Feuchtmittel auf die Feuchtmittelauftragswalzen und damit auf den Plattenzylinder gegeben, was zu einer starken Abnahme der Spannungsanzeige führte. Erst mit einem relativ großen zeitlichen Abstand nach dem Abnehmen der Spannungsanzeige, der mit der Feuchtmittelspeicherkapazität der Farbe im Farbwerk zusammenhängt, traten sogenannte Wassermarken auf dem Druckbild auf, also jene Funktionsstörung des Offsetdruckprozesses, bei welcher die für die Farbannahme vorgesehenen Flächenelemente der Druckplatte infolge des hohen Feuchtmittelanteils auf der Farboberfläche nur noch unvollständig eingefärbt wurden. Die zwischen diesen Flächenelementen und den Farbauftragswalzen bei normalen Druckbedingungen erfolgende Spaltung der Druckfarbe-Feuchtmittelemulsion war infolge der zu hohen Feuchtmittelzugabe teilweise durch eine Spaltung des auf der Farboberfläche haftenden Feuchtmittels ersetzt worden, wobei keine Farbe übertragen werden kann. Die Wiedereinstellung normaler Druckbedingungen benötigte nach dieser starken Überfeuchtung der Farbe im Farbwerk bis an die Grenzen ihrer Feuchtmittelspeicherkapazität sehr viel Zeit.

Eine Meßreihe mit dem ersten Ausführungsbeispiel der Erfindung gemäß Fig. 1, welche an einem Versuchsfarbwerk unter separater Variation der Farbschichtdicke, der Feuchtmittelmenge und der Geschwindigkeit durchgeführt wurde führte zu folgenden Ergebnissen :

a) Der Ultraschallpegel, d. h. die Spannungsanzeige nimmt ab, wenn die Farbschichtdicke im Walzenspalt abnimmt und/oder wenn die Feuchtmittelmenge im Walzenspalt zunimmt ;

$$\text{d. h. wenn das Verhältnis } \frac{\text{Farbmenge}}{\text{Feuchtmittelmenge}}$$

bezogen auf die Flächeneinheit abnimmt.

Eine starke Abnahme dieses Verhältnisses führt zum Auftreten von Wassermarken im Druckbild.

b) Der Ultraschallpegel, d. h. die Spannungsanzeige nimmt zu, wenn die Farbschichtdicke im Walzenspalt zunimmt und/oder wenn die Feuchtmittelmenge im Walzenspalt abnimmt ;

$$\text{d. h. wenn das Verhältnis } \frac{\text{Farbmenge}}{\text{Feuchtmittelmenge}}$$

bezogen auf die Flächeneinheit zunimmt.

Eine starke Zunahme dieses Verhältnisses führt zum Tonen.

c) Der Ultraschallpegel nimmt nur schwach zu, wenn die Umfangsgeschwindigkeit der Walzen zunimmt.

Nach den bisherigen Meßergebnissen, die mit dem ersten Ausführungsbeispiel der Erfindung gewonnen wurden, darf davon ausgegangen werden, daß eine Regelung des Farb- und Feuchtmittelflusses, bei welcher die Spannungsanzeige dieses Ausführungsbeispiel konstant bleibt, auch zum Konstantbleiben des Verhältnisses von Farbmenge zu Feuchtmittelmenge und dabei insbesondere zu der an der Farboberfläche haftenden Feuchtmittelmenge führt. Damit führt ein Konstanthalten der Spannungsanzeige durch die Regelung des Farb- und Feuchtmittelflusses zu einer konstanten Offsetdruckqualität, wenn von eventuellen Änderungen der Bedruckstoffqualität, evtl. Verschleiß der Druckplatte und ähnlichem abgesehen wird.

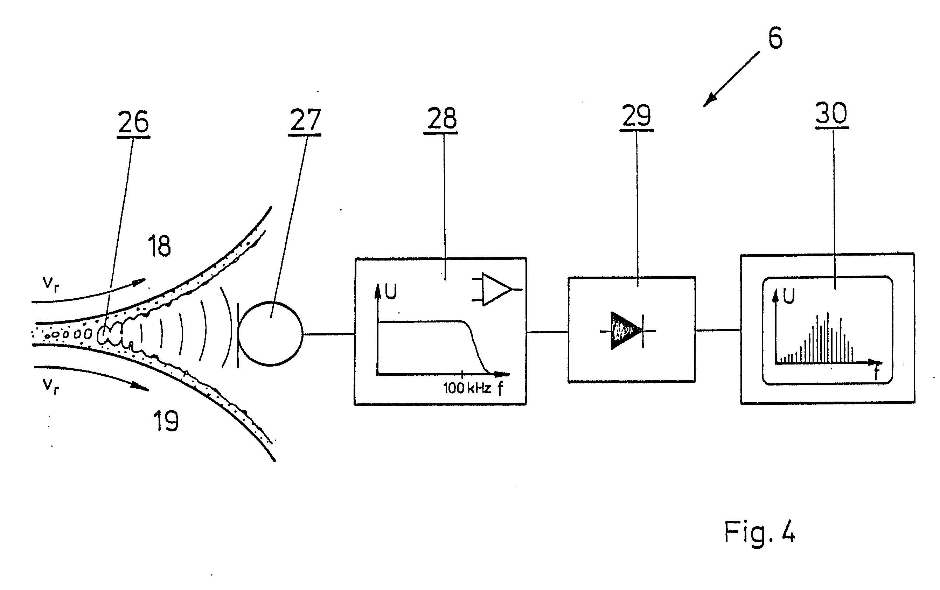

Das zweite im folgenden beschriebene Ausführungsbeispiel der Erfindung ist in Fig. 4 dargestellt.

Hierin zeigt Position 26 wieder einen Spaltausgang, der von zwei aufeinander mit der Umfangsgeschwindigkeit $v_r$ abrollenden Walzen gebildet wird, deren Mantelflächen mit einem Flüssigkeitsgemisch bedeckt sind, welches an diesem Spaltausgang gespalten wird. Gegenüber von dem Spaltausgang befindet sich wieder der akustische Sensor, welcher der meßtechnischen Erfassung der beim Spaltprozeß ausgesandten Schallsignale dient. Von diesem zeigt Position 27 wieder ein Mikrofon, welches die empfangenen Schallsignale in elektrische Signale umwandelt, die in dem in Position 28 dargestellten Verstärker anschließend verstärkt werden. Position 28 zeigt zudem den Frequenzgang der aus dem Mikrofon und dem Verstärker gebildeten Einheit, dessen Verlauf so gewählt ist, daß er sich für eine nachfolgende frequenzselektive Auswertung besonders gut eignet. Das Ausgangssignal des Verstärkers wird dem in Position 29 dargestellten Gleichrichter zugeführt, welcher die ankommenden bipolaren Signale in polare Signale umwandelt. Diese polaren Signale werden anschließend dem in Position 30 dargestellten Fourieranalysator zugeführt und in diesem einer frequenzselektiven Analyse unterzogen, d. h. in ihre Fourierkomponenten zerlegt. Die Fourieranalyse der vom Spalt ausgesandten Schallwellen ermöglicht detailliertere Aussagen über den Spaltprozeß und seine Einflußgrößen als die im ersten Ausführungsbeispiel der Erfindung dargestellte Auswertungsweise.

**Patentansprüche**

1. Vorrichtung zur berührungslosen meßtechnischen Echtzeiterfassung der den Trenn- bzw. Spaltprozeß von Flüssigkeitsvolumen bzw. Flüssigkeitsschichten in Walzenspalten von Druckmaschinen charakterisierenden Eigenschaften bzw. Größen dadurch gekennzeichnet, daß die Vorrichtung folgende Teile aufweist :
— einen in der Nähe des Ausgangs eines Walzenspalts angeordneten akustischen Sensor (6) zum Empfang der beim Spaltprozeß erzeugten und ausgesandten Schallsignale ;
— eine dem Sensor nachgeschaltete Auswerteelektronik (22-24 ; 28-30) zur Weiterverarbeitung der elektrischen Signale des Sensors, und
— eine mit der Auswerteelektronik verbundene Anzeige (25).

2. Vorrichtung nach Anspruch 1, dadurch gekennzeichnet, daß der Sensor (6) in einem Spaltausgang zwischen einer Auftragwalze (1, 2) und einer Druckplatte angeordnet ist.

3. Vorrichtung nach Anspruch 1, dadurch gekennzeichnet, daß der Sensor (6) nur Schallwellen im Ultraschallbereich aufnimmt.

4. Vorrichtung nach Anspruch 1, dadurch gekennzeichnet, daß die Auswerteelektronik des Sensors (6) einen Fourieranalysator (30) enthält.

5. Verfahren zur berührungslosen meßtechnischen Echtzeiterfassung von Flüssigkeitseigenschaften, dadurch gekennzeichnet,
a) daß ein Flüssigkeitsvolumen in ein Kraftfeld gebracht wird,
b) daß dieses Kraftfeld die Trennung bzw. Spaltung dieses Flüssigkeitsvolumens in Teilvolumina bewirkt,
c) daß die bei diesem Trenn- bzw. Spaltprozeß entstandenen und ausgesandten Schallwellen mit einem akustischen Sensor empfangen werden, und
d) daß die empfangenen Schallwellen meßtechnisch ausgewertet werden.

**0 087 571**

### Claims

1. Apparatus for contactless real-time measurement to determine properties of values characterising the separating or splitting process of liquid volumes or liquid layers in printing machine roll nips, characterised in that the apparatus comprises the following parts :
— an acoustic sensor (6) disposed near the outlet of a roll nip to receive the sound signals generated and emitted during the splitting process ;
— an electronic evaluator (22-24 ; 28-30) connected after the sensor for further processing of the electrical signals from the sensor, and
— a display (25) connected to the electronic evaluator.

2. Apparatus according to claim 1, characterised in that the sensor (6) is disposed in a nip outlet between an applicator roll (1, 2) and a printing plate.

3. Apparatus according to claim 1, characterised in that the sensor (6) receives only sound waves in the ultrasonic range.

4. Apparatus according to claim 1, characterised in that the electronic evaluator of the sensor (6) contains a Fourier analyzer (30).

5. A method for contactless real-time measurement to detect the properties of liquids, characterised in that :
a) A liquid volume is brought into a force field,
b) This force field causes the said liquid volume to be separated or split into subvolumes,
c) The sound waves originating and emitted during this separating or splitting process are received by an acoustic sensor, and
d) The received sound waves are evaluated by measurement.

### Revendications

1. Un dispositif d'enregistrement sans contact et en temps réel des données et valeurs caractérisant le procédé de séparation et de dissociation de volumes de liquides ou de couches de liquides dans l'écartement de rouleaux de machines à imprimer, caractérisé par le fait que ce dispositif comprend les parties suivantes :
— un détecteur acoustique (6) installé à proximité de la sortie de l'écartement de rouleaux pour enregistrer les signaux acoustiques produits et émis lors du procédé de dissociation ;
— un dispositif électronique d'exploitation, placé en aval du détecteur (22-24 ; 28-30), pour exploiter les signaux électriques du détecteur et
— un dispositif de visualisation (25) relié avec le dispositif électronique d'exploitation.

2. Un dispositif selon la revendication numéro 1 caractérisé par le fait que le détecteur (6) est installé entre un rouleau encreur (1, 2) et une plaque d'impression.

3. Un dispositif selon la revendication numéro 1 caractérisé par le fait que le détecteur n'enregistre que des ondes acoustiques de la plage ultra-sonore.

4. Dispositif selon la revendication numéro 1 caractérisé par le fait que le dispositif électronique d'exploitation du détecteur (6) comprend un analyseur de Fourier (30).

5. Procédé d'enregistrement en temps réel et sans contact, les propriétés de liquides caractérisé par le fait que :
a) un volume de liquide est transféré dans un champ de force ;
b) ce champ de force accomplit la séparation respectivement dissociation de ce volume de liquide en volumes partiels ;
c) que les ondes acoustiques produites par ce procédé de séparation ou de dissociation sont enregistrées par un détecteur acoustique et
d) les ondes acoustiques reçues sont exploitées par mesurage.

Fig. 1

Fig. 2

Spannungsanzeige

[V]

0,5

0

Feuchtwerk ab

Tonen beginnt

Feuchtwerk an

Tonen beendet

starke manuelle
Feuchtmittelzugabe

Wassermarken
erscheinen

Meßzeit [ t ]

Fig. 3

3

Fig. 4